# EUROPÄISCHE PATENTANMELDUNG

(11) **EP 1 150 269 A1**
(43) Veröffentlichungstag der Anmeldung: **31.10.2001**
(21) Anmeldenummer: 01109540.3
(22) Anmeldetag: 17.04.2001
(51) Int. Cl.: G09B 23/28

(54) **Kauapparat**

(30) Priorität: 27.04.2000 DE 10020617
(71) Anmelder: HAARMANN & REIMER GMBH, 37601 Holzminden (DE)
(72) Erfinder: Reinders, Gerald Dr., 33154 Salzkotten (DE); Erfurt, Harry, 37170 Uslar (DE); Boos, Horst, 37603 Holzminden (DE); Wellmann, Rainer, 37603 Holzminden (DE)
(74) Vertreter: Zobel, Manfred, Dr.

(57) **Zusammenfassung**

Eine neue Apparatur kann zur Simulation des Kauvorgangs verwendet werden.

## Beschreibung

Die Erfindung betrifft eine Vorrichtung zur Simulation des Kauvorgangs und seine Verwendung zur Identifizierung von flüchtigen Komponenten, die im Mundbereich während des Kauvorgangs freigesetzt werden.

Aus J. Food Sci. (1986) 51 (1); 249-250, Trends in Flavour Research (1994), 59-64; Z. Lebensm. Unters. Forsch. (1995) 201; 62-68; J. Agric. Food Chem. (1995) 43, 2179-2186; J. Agric. Food Chem. (1996) 44, 3560-3563 und Food Flavors: Formation, Analysis and Packaging Influences (1998); 111-116 sind Apparaturen zur Simulation des Kauvorgangs bekannt. Mit den Apparaturen lässt sich die Aromazusammensetzung dynamisch entnommener Proben aus dem Kopfraum über einem durchmischten Lebensmittel mit Detektorsystemen direkt oder nach gaschromatographischer Trennung untersuchen. Mit den Apparaturen lassen sich jedoch nur flüssige und leicht viskose Proben durchmischen bzw. zerkleinern. Nachteilig ist auch, dass die Apparaturen nicht automatisiert werden können.

Aufgabe der vorliegenden Erfindung ist eine Vorrichtung, in der der Kau- und Knetvorgang im menschlichen Mund simuliert wird, so dass vergleichende (standardisierte) Untersuchungen an verschiedenen Materialien möglich sind.

Es wurde eine Vorrichtung zur Simulation des Kauvorgangs gefunden, die dadurch gekennzeichnet ist, dass sie einen thermostatisierbaren Knetraum enthält, in dessen unterem Teil sich Knetschaufeln zum Zerkleinern und Kneten des Untersuchungsmaterials befinden und in dessen oberem Teil sich ein Luftraum zum Ansammeln der bei der Zerkleinerung und dem Kneten entstehenden flüchtigen Komponenten befindet, wobei durch einen Einlass in den Knetraum Speichel geleitet wird und wobei durch einen weiteren Einlass in den Knetraum Luft geleitet wird, die mit den flüchtigen Komponenten des Zerkleinerungs- und Knetvorgangs durch einen Auslass des Knetraums einem Detektorsystem zugeführt wird.

Überraschenderweise können in die erfindungsgemäße Vorrichtung Materialien aller Art als Untersuchungsmaterialien eingegeben werden. Der Untersuchungsvorgang lässt sich in der erfindungsgemäßen Vorrichtung weitgehend automatisieren, so dass vergleichbare Untersuchungen verschiedener Materialien möglich sind.

Der Knetraum ist in der Regel als ein durch einen Deckel verschließbares Gefäß ausgestaltet. Der Knetbereich im unteren Teil entspricht mit 50 bis 100 cm³ etwa dem menschlichen Mundraum. Der obere Teil (Kopfraum ) umfaßt 150 bis 200 ml. Das Gefäß und der Deckel sind thermostatisierbar. In der Regel wird der Knetraum auf eine physiologische Temperatur (35 bis 37°C) eingestellt.

Die Thermostatisierung kann durch übliche Methoden erfolgen. Vorzugsweise wird der Knetraum einschließlich des Deckels mit einer Doppelwandung versehen, durch die eine Flüssigkeit (z.B. Wasser) zur Wärmeübertragung geleitet wird.

Der untere Teil des Knetraums wird durch Knetschaufeln ausgefüllt, so dass praktisch kein Totraum (Volumen, das die rotierenden Knetschaufeln nicht erreichen) entsteht. Die Knetschaufeln werden mit einem Motor mit einem Drehmoment von 1 bis 10 Nm, vorzugsweise 5 bis 6 Nm, angetrieben. Die Drehfrequenz des Motors ist variierbar von 0,1 bis 240 min⁻¹. Bevorzugt wird eine Drehfrequenz im Bereich 30 bis 150 min⁻¹, die der Kaufrequenz des Menschen entspricht und durch genaue Einstellung eine Simulation der Essgewohnheiten zulässt.

Die Knetschaufeln sind in der Regel unregelmäßig geformt, besitzen viele Flächen, drehen gegenläufig und greifen beim Drehen ineinander. Durch Kunsstoffaufsätze auf einige Knetflächen wird zudem der Knet-Totraum verringert. Durch eine Getriebeverbindung rotiert eine Knetschaufel etwa 1,5 mal schneller als die andere, wodurch Scherkräfte von 0 bis 10 Nm auftreten, die das Material im Knetraum zerdrücken und zerquetschen. Bevorzugt werden 2 Knetschaufeln eingesetzt.

Mit den Knetschaufeln können Materialien aller Art (fest, flüssig oder pastenartig) zerkleinert und geknetet werden.

Durch einen vorzugsweise am Deckel angebrachten Einlass wird Speichellösung in den Knetraum gegeben. Es kann hier selbstverständlich Speichel verschiedenster Zusammensetzung, also natürlicher oder künstlicher Speichel, verwendet werden.

Zur Standardisierung einer Simulation des Kauvorgangs wird vorzugsweise ein künstlicher Speichel verwendet. Künstlicher Speichel hat beispielsweise die Zusammensetzung:
2 bis 10 g Kaliumdihydrogencarbonat
0,1 bis 1,0 g Kaliumchlorid
0,1 bis 1,0 g Natriumcarbonat
0,1 bis 1,0 g α-Amylase aus Schweinepankreas
0,1 bis 1,0 g Mucin aus Rinderunterkieferdrüse
in 1 1 entmineralisiertem Wasser
eingestellt auf pH 7 bis 8.

Der Speichel wird dosiert in den Knetraum gegeben. Dosierung kann z. B. über eine Pumpe oder ein Ventil erfolgen. Im allgemeinen gibt man 0,5 bis 20 g/min, bevorzugt 2 bis 10 g/min, Speichel zu 30 g des zu untersuchenden Materials.

Über dem Knetraum im oberen Teil des Kneters (Kopfraum) sammeln sich flüchtige Komponenten an, die bei dem Kauvorgang (dem Zerkleinern und Kneten) entstehen.

Zur Untersuchung dieser flüchtigen Komponenten wird in einen Einlass des Knetraums, vorzugsweise durch den Deckel, Luft geleitet, die mit den flüchtigen Komponenten durch einen Auslass, ebenfalls vorzugsweise durch den Deckel, abgeleitet werden.

Durch das Ein- und Ausleiten der Luft soll ein "Beatmen" des Knetraums simuliert werden.

Die Luft wird mit einem Fluss von 1 bis 20 l/min, vorzugsweise 5 l/min, in den Knetraum geleitet.

Die mit den flüchtigen Komponenten beladene Luft wird einem Detektorsystem zugeführt.

Die flüchtigen Komponenten können zeitabhängig nacheinander mit einem Kühlmittel ausgefroren, oder auf Adsorptionsröhrchen mit Trägermaterialien, wie Tenax TA, Tenax GR, Carbotrap 300 oder Carbosieve angereichert werden. Durch automatische Thermodesorption lassen sie sich danach off-line gaschromatographisch trennen und mit unterschiedlichen Detektionssystemen wie Flammenionisationsdetektoren, element-spezifischen Detektoren, olfactometrischen Detektoren oder Massenspektrometern untersuchen. Alternativ dazu kann eine direkte Analyse durch Sensorsysteme oder durch empfindliche massenspektroskopische Methoden (z.B. APCI - MS) durchgeführt werden, wie sie in der EP-A-0 819 937 beschrieben wird.

Die erfindungsgemäße Vorrichtung kann weitgehend automatisiert werden, durch Einsatz eines Flussreglers für die Druckluft, einer programmierbaren Ventilschaltung für stoßweise Zufuhr von Luft (Simulation eines Atemrhytmus), einer Pumpe zur definierten Zufuhr von Speichellösung und der Verwendung eines programmierbaren Gasproben-Sammlers und anschließender automatischer Thermodesorption der adsorbierten Aromastoffe in einen Gaschromatographen.

Mit Hilfe der erfindungsgemäßen Vorrichtung lässt sich der Einfluss des Kauvorgangs und der Matrix auf die dynamische Freisetzung von Aromastoffen untersuchen und die für die organoleptische Rezeption des Menschen relevanten Stoffe in dem zu untersuchenden Material feststellen.

Als zu untersuchendes Material kommen alle Materialien in Frage, die üblicherweise vom Menschen in den Mund genommen werden. Dies sind beispielsweise

Lebensmittel, wie Getränke, Joghurts, Desserts, Eiscremes, Suppen, Soßen, Brotaufstriche, würzige Snacks, Fleisch, Fisch, Früchte, Nüsse, Fertiggerichte (wie Pizza, Feinkostsalate und Babynahrung), Süßwaren (wie Schokolade, Karamellen, Fruchtgummis) und Kaugummi, Mundpflegemittel, wie Zahnpasten und Mundwasser, Tiernahrung, wie Feucht- und Trockenfutter und Arzneimittel, wie Hustensaft, Lutschbonbons und Kautabletten.

Die Erfindung betrifft also auch die Verwendung der erfindungsgemäßen Vorrichtung zur Bestimmung von flüchtigen Stoffen, die für die organoleptische Rezeption des Menschen relevant sind und beim Kauvorgang entstehen.

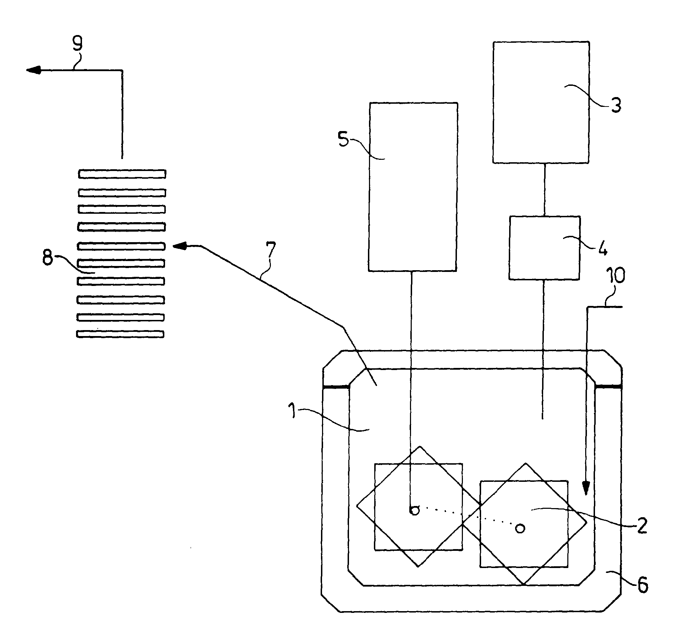

Die erfindungsgemäße Vorrichtung kann am Beispiel von Figur 1 wie folgt beschrieben werden:

Im unteren Teil des Knetraums (1) befinden sich Knetschaufeln (2), die durch einen Motor (5) über ein Getriebe angetrieben werden. Der Knetraum (1) und der Deckel werden durch eine Flüssigkeit thermostatisiert (6). Durch den Deckel des Knetraums (1) wird Speichel (3) über eine Pumpe (4) in den Knetraum (1) gegeben. Durch den Gaseinlass (10) wird Luft dem Knetraum (1) zugeführt, die durch den Auslass (7) in ein Adsorptionssystem (8) geleitet wird. Durch das Adsorptionssystem (8) ist es möglich, die beim Kauvorgang freigesetzten flüchtigen Bestandteile zeitabhängig zu adsorbieren. Nach Thermodesorption der einzelnen Adsorptionsröhrchen und gaschromatographischer Trennung werden die flüchtigen Verbindungen einem Detektor zugeleitet.

### Bezugszeichenliste

- 1.: Knetraum
- 2.: Kneter
- 3.: Speichellösung
- 4.: Pumpe
- 5.: Motor
- 6.: Flüssigkeit zum Thermostatisieren
- 7.: Gasauslass
- 8.: Adsorptionssystem
- 9.: Thermodesorptionssystem mit Gaschromatograph und Detektoren
- 10.: Gaseinlasssystem

## Patentansprüche

1. Vorrichtung zur Simulation des Kauvorgangs, **dadurch gekennzeichnet, dass** sie einen thermostatisierbaren Knetraum enthält, in dessen unterem Teil sich Knetschaufeln zum Zerkleinern und Kneten des Untersuchungsmaterials befinden und in dessen oberem Teil sich ein Luftraum zum Ansammeln der bei der Zerkleinerung und dem Kneten freigesetzten flüchtigen Komponenten befindet, wobei durch einen Einlass in den Knetraum Speichel geleitet wird und wobei durch einen weiteren Einlass in den Knetraum Luft geleitet wird, die mit den flüchtigen Komponenten des Zerkleinerungs- und Knetvorgangs durch einen Auslass des Knetraums einem Detektorsystem zugeführt wird.

2. Vorrichtung nach Anspruch 1, **dadurch gekennzeichnet, dass** der Knetraum auf eine physiologische Temperatur thermostatisiert ist.

3. Vorrichtung nach den Ansprüchen 1 und 2, **dadurch gekennzeichnet, dass** die Knetschaufeln den unteren Teil der Vorrichtung nahezu ohne Totraum ausfüllen.

4. Verwendung der Vorrichtung nach den Ansprüchen 1 bis 3 zur Bestimmung von flüchtigen Stoffen, die für die organoleptische Rezeption des Menschen relevant sind und die bei dem Kauvorgang freigesetzt werden.

5. Verwendung nach Anspruch 4, **dadurch gekennzeichnet, dass** die flüchtigen Stoffe bei dem Kauen von Lebensmitteln freigesetzt werden.
